Europäisches Patentamt

European Patent Office

Office européen des brevets

(11) Publication number: **0 160 420**
**B1**

# (12) EUROPEAN PATENT SPECIFICATION

(45) Date of publication of patent specification: **13.06.90**

(51) Int. Cl.⁵: **A 01 G 3/04**

(21) Application number: **85302388.5**

(22) Date of filing: **04.04.85**

(54) Apparatus for trimming a hedge.

(30) Priority: **06.04.84 US 597736**

(43) Date of publication of application:
**06.11.85 Bulletin 85/45**

(45) Publication of the grant of the patent:
**13.06.90 Bulletin 90/24**

(84) Designated Contracting States:
**BE DE FR GB IT LU NL SE**

(56) References cited:
**DE-C- 617 735**
**GB-A- 645 913**
**US-A-2 763 925**
**US-A-3 143 798**
**US-A-3 193 925**
**US-A-3 293 746**
**US-A-3 538 693**

(73) Proprietor: **Black & Decker Inc.**
**Drummond Plaza Office Park 1423 Kirkwood Highway**
**Newark Delaware 19711 (US)**

(72) Inventor: **Pizzuto, Russell**
**332 Holly Road**
**Easton Maryland (US)**
Inventor: **Schiazza III, Alfred**
**608 Hardin Street**
**Easton Maryland (US)**

(74) Representative: **Lucas, Brian Ronald et al**
**Lucas, George & Co. 135 Westhall Road**
**Warlingham Surrey CR3 9HJ (GB)**

Courier Press, Leamington Spa, England.

## Description

This invention relates to an apparatus for trimming a hedge and, more particularly but not exclusively, is concerned with apparatus which is powered by rechargeable batteries.

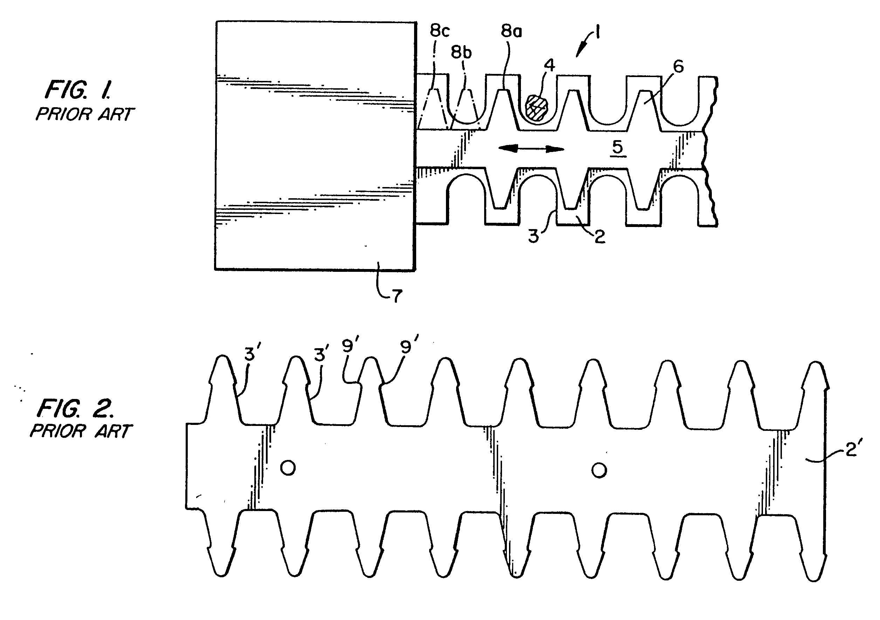

Figure 1 of the accompanying drawings is a schematic representation of a conventional apparatus for trimming a hedge. The apparatus, which is generally identified by reference numeral 1, comprises a stationery guide member 2 provided with a plurality of slots 3 disposed generally perpendicular to the longitudinal axis of the guide member 2. The slots 3 accommodate the stems of the hedge or shrub to be trimmed, such as stem 4.

A cutter bar 5 which includes a plurality of individual blades 6 disposed generally transverse to the longitudinal axis of the cutter bar 5, is mounted on the guide member 2. A motor (not shown) is mounted in housing 7 and is arranged to move the cutter bar 5 back and forth with respect to the guide member 2. During this movement each blade moves completely across its respective slot 3. Thus a blade moves from position 8a through position 8b to position 8c and back to position 8a during each complete cycle. Housing 7 also contains a rechargeable battery pack (not shown).

In the conventional apparatus described above, stems which have been guided into the slots 3 by the action of the operator have a tendency to be displaced out of the slots 3 upon engagement with the blades. This tendency is particularly pronounced when the individual blades are generally trapezoidal in shape, as is blade 6. If the frictional engagement between the stem and the slot and the stem and the blade is insufficient, the stem will tend to move out of the slot and be only partially severed by the action of the blade, or escape cutting entirely. This problem can become particularly acute after periods of prolonged use when the blades have become worn and a greater cutting force is required to sever the stem.

Attempts have been made to control the movement of stems, including the use of blades having recessed curve-shaped cutting edges. However, production costs for such intricate blades can be prohibitively high, and any sharp projections on the moving blades will have a tendency to "spear" and mangle the stems rather than cut them cleanly.

Figure 2 shows another prior art attempt to control the stem movement. In the Figure 2 apparatus, the edges defining the individual slots 3' on the guide member 2' are equipped with barb-like projections 9' located at approximately the outermost position of the tips of the cutting blades. These barbs have not been entirely successful since the stems can still move in the direction out of the slots such that only the portion of the stem inboard of the barbs 9 is actually severed upon passage of the blade. Therefore, the partially cut stems must be acted upon by several passes of an individual blade before being completely severed. As a result, the severed stems typically have a mangled and shredded appearance, and this type of cutting operation is generally unacceptable. Furthermore, while this type of cutting operation might be tolerated when an unlimited power supply is present, the finite power capacity of the rechargeable battery operated apparatus requires a more efficient cutting operation.

Thus, inefficiencies in the cutting operation with conventional apparatus powered by rechargeable batteries can result in limited cutting between recharging and/or the need for larger, heavier power packs. Either condition can make the trimming device commercially unattractive.

US-A-3 143 798 discloses an apparatus for trimming a hedge, which apparatus comprises:

a) an elongate guide member having a plurality of slots orientated generally transverse to the longitudinal axis of the guide member for accommodating individual stems of the plant to be trimmed, each slot having a closed end and an open end; and

b) an elongate cutter bar having a plurality of blades orientated generally transverse to the longitudinal axis of said cutter bar for shearing the stems upon reciprocation of the cutter bar relative to the guide member. In this disclosure each of the slots comprise a pair of side walls each of which has a recessed CONVEX portion which extends inwardly from a position adjacent the tip end of the blade.

This arrangement has the same disadvantage as the previously described prior art insofar as stems tend to be ejected from the slots during a cutting operation.

The present invention, at least in its preferred forms, attempts to reduce this problem.

According to the present invention there is provided an apparatus for trimming a hedge, which apparatus comprises:

a) an elongate guide member having a plurality of slots orientated generally transverse to the longitudinal axis of said guide member for accommodating individual stems of the plant to be trimmed, each slot having a closed end and an open end; and

b) an elongate cutter bar having a plurality of blades oriented generally transverse to the longitudinal axis of said cutter bar for shearing the stems upon reciprocation of the cutter bar relative to the guide member, at least one of said slots comprising a pair of side walls each of which has a recessed portion; characterised in that said recessed portion has a concave inwardly facing portion which faces the closed end of said slot and extends from a position adjacent the tip of the blade a distance perpendicular to the longitudinal axis of said guide member equal to at least 50% of the distance between the tip end of the blade associated with said slot and the closer of the root end of said blade and the closed end of said slot measured perpendicular to the longitudinal axis of said guide member.

Preferably the recessed portion is arcuate.

Advantageously the minimum angle between the longitudinal axis of said guide member and a line drawn tangentially to any point on said inwardly facing portion is about 60°.

Preferably, at least one of said slots has side walls which do not have said recessed portion.

Advantageously, said at least one slot is located proximate the free end of said guide member.

Preferably each of said plurality of blades is trapezoidal.

Advantageously, the adjacent side walls of adjacent slots taper smoothly to rounded top portions.

Preferably, the apparatus includes a rechargeable battery pack.

For a better understanding of the invention reference will now be made, by way of example, to Figures 3 to 6 of the accompanying drawings in which:-

Figures 3A and 3B are top and bottom views, respectively, of an apparatus in accordance with the present invention;

Figures 4A, 4B and 4C are side and end views, respectively, of the apparatus shown in Figure 3;

Figure 5 is a plan view of the guide member of the apparatus shown in Figure 3; and

Figure 6 is a detail of a portion of the guide member shown in Figure 5.

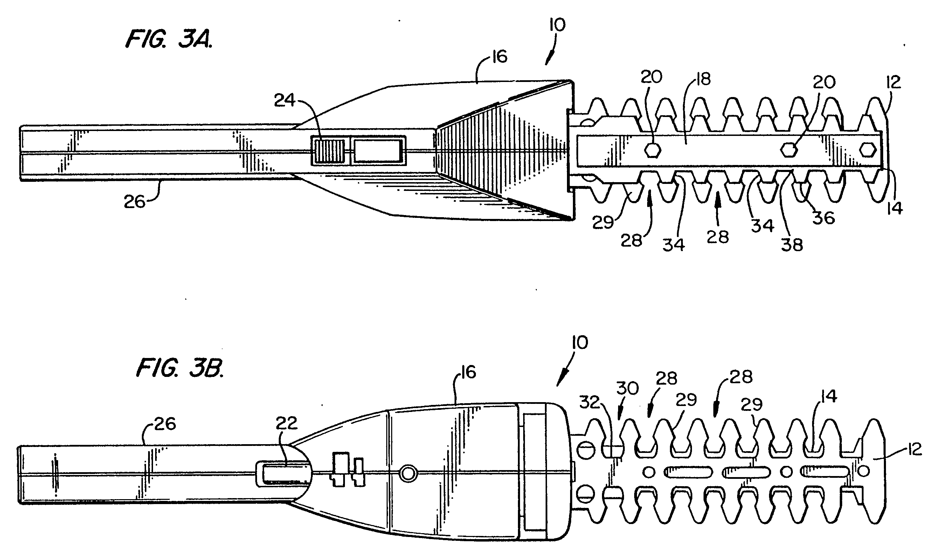

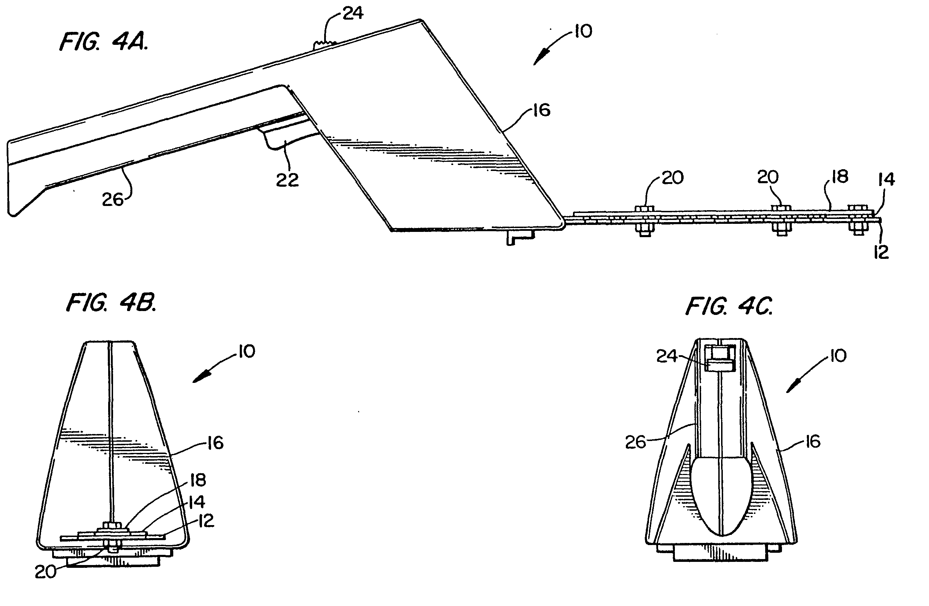

Referring to Figures 3 and 4, there is shown an apparatus which is generally identified by reference numeral 10. The apparatus 10 comprises a guide member (12) which is fixedly attached to a frame (not shown) encased in a housing 16. A cutter bar 14 is mounted on the guide member 12 and is conventionally constrained for sliding movement along the longitudinal axis of the guide member 12 by a keeper plate 18 and bolts 20 which pass through slots (not shown) in the cutter bar 14 and which are seated in the guide member 12.

Cutter bar 14 is operatively connected to an electric motor (not shown) positioned within housing 16 and powered by rechargeable, Nickel-Cadmium batteries (not shown) which are also enclosed in the housing 16.

Motor control elements including a trigger switch 22 and a safety switch 24 are provided on the housing 16 as shown in Figures 3 and 4. The housing 16 also includes a handle extension 26 suitably configured for grasping by an operator.

As best seen in Figures 3A and 3B, guide member 12 includes a plurality of slots 28. Each slot 28 extends generally perpendicular to the longitudinal axis of guide member 12 and has an open end 30 and a closed end 32.

Cutter bar 14 includes a plurality of trapezoidal blades 34 each having a tip end 36 and a root end 38. The range of motion of each blade 34 is such that it completely traverses its associated slot 28, and then returns, during a complete reciprocative cycle, the slot 28 being substantially uncovered at the start, at the mid point, and again at the end of each cycle.

Slots 28 and blades 34 are shown disposed to both sides of the longitudinal axis of members 12 and 14, respectively. However the slots 28 and blades 34 could be disposed to one side only of said axis. In the embodiment shown, the guide member 12 and the cutter bar 14 are approximately 15 cm long, and the guide member 12 and the cutter bar 14 about 6 cm and 4.1 cm wide, respectively.

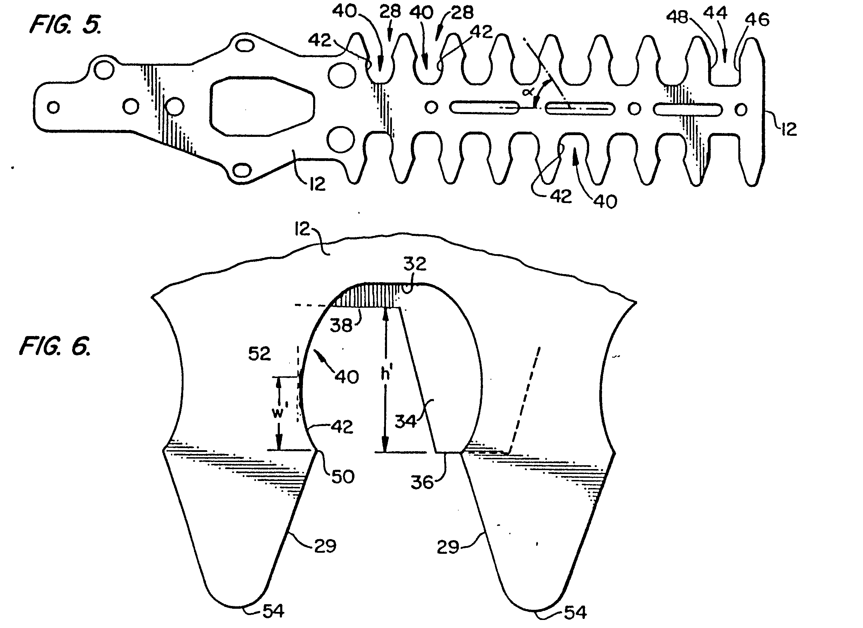

As better shown in Figures 5 and 6, the slots 28 have side walls 29. Each side wall comprises a first portion which extends from the open end 30 of the slot 28 to a point 50 and a second portion which takes the form of a concave-shaped recess 40 which extends from the point 50 to the closed end 32 of the slot 28. Each concave-shaped recess 40 has an inwardly facing portion 42 which serves to inhibit movement of the stems out of the slots 28 when acted upon by the trapezoidal blades 34. The inwardly facing portions 42 thus help to ensure complete cutting of the stems on a single cutting stroke of the respective blades 34.

The contact angle at a point of the inwardly facing portions 42 of recesses 40, as used herein, is defined by the angle between a tangent drawn to the point and the axis of guide member 12. Thus at the point 50, the contact angle α is approximately 60°. Acute contact angles, that is, angles less than 90 degrees, will provide an inwardly directed restraining force on the guided stems.

It will be noted from Figure 6 that the inwardly facing portion 42 extends from the point 50 level with the tip end 36 of the blade 34 to a point 52 where the contact angle is 90°. The distance "w" between point 50 and point 52 measured perpendicular to the longitudinal axis of the guide member 12 is at least about 50% of the effective height h' of blade 34.

In the case depicted in Figure 6 where the longitudinal portion of cutter bar 14 will be contacted by the stem before the closed slot end 32, h' is equal to the actual height of blade 34, namely the perpendicular distance from tip end 36 to root end 38. In an alternate embodiment (not shown) where the stem will first contact the closed slot end 32, the effective blade height h' is equal to the perpendicular distance from the tip end 36 to the closed slot end 32.

The particular concave curve-shaped recess 40 depicted in Figures 5 and 6 has a radius of curvature of about 22.5 cm, and presents a minimum contact angle of about 60° to a guided stem, with the minimum angle occurring at point 50. The inwardly facing portions 42 can have other radii of curvature or be of generally curvilinear outline and other minimum contact angles can be used. Also, the recess shapes could be used to provide a stem-restraining function. It has been found that minimum contact angles significantly less than 60° can increase the probability of jamming by the captured stems.

Referring again to Figure 6, the first portions of the adjacent side walls 29 of adjacent slots converge to rounded tips 54 to provide unobstructed paths for stems into the interior of the slots 28. The tip ends 36 of blades 34 are substantially level with the point 50 in order to minimize spearing as the stems pass into the interior of the slots.

Tests with trimmers having cutter bars and guide members made in accordance with the drawings have shown that cleanly severed stems can be obtained, indicating increased cutting efficiency. The resulting increase in cutting efficiency and projected total cut area between charges is especially important where the apparatus is powered by rechargeable batteries.

Referring now to Figure 5, the guide member 12 is provided with an oversized slot 44 for accommodating large-diameter stems which could potentially cause stalling or jamming of the apparatus.

The slot 44 is formed in the guide member 12 remote from the housing 16. Slot 44 is formed with straight side walls 46, 48 having no stem capture recesses or side portions presenting acute contact angles. Large stems can be preferentially guided by the operator into slot 44 and severed using multiple passes of the respective blades 34. The absence of stem capture recesses 40 from side walls 46, 48 of slot 44 allows the stem to move outwardly upon contact by the blade, resulting in only partial cutting for each cutting stroke. Although an inefficient cutting operation, the oversized slot without capture means is intended to provide for realistic trimming applications encountered by the operator and to accommodate the operator's desire to complete the trimming without resorting to another trimming tool.

## Claims

1. An apparatus for trimming a hedge, which apparatus comprises:

a) an elongate guide member (12) having a plurality of slots (28) orientated generally transverse to the longitudinal axis of said guide member (12) for accommodating individual stems of the plant to be trimmed, each slot (28) having a closed end (32) and an open end (30); and

b) an elongate cutter bar having a plurality of blades (34) oriented generally transverse to the longitudinal axis of said cutter bar (14) for shearing the stems upon reciprocation of the cutter bar (14) relative to the guide member (12), at least one of said slots (28) comprising a pair of side walls (29) each of which has a recessed portion (40), characterised in that said recessed portion (40) has a concave inwardly facing portion (42) which faces the closed end (32) of said slot (28) and extends from a position adjacent the tip end of the blade (34) a distance (w) perpendicular to the longitudinal axis of said guide member (12) equal to at least 50% of the distance between the tip end (36) of the blade (34) associated with said slot (28) and the closer of the root end (38) of said blade (34) and the closed end (32) of said slot measured perpendicular to the longitudinal axis of said guide member (12).

2. An apparatus according to Claim 1, wherein said recessed portion (40) is arcuate.

3. An apparatus according to Claim 1 or 2, wherein the minimum angle ($\alpha$) between the longitudinal axis of said guide member (12) and a line drawn tangentially to any point on said inwardly facing portion (42) is about 60°.

4. Apparatus according to Claim 1, 2 or 3, wherein at least one of said slots (44) has side walls (46, 48) which do not have said recessed portion.

5. Apparatus according to Claim 4, wherein said at least one slot (44) is located proximate the free end of said guide member (12).

6. Apparatus according to any preceding Claim, wherein each of said plurality of blades (34) is trapezoidal.

7. Apparatus according to any preceding Claim, wherein the adjacent side walls of adjacent slots taper smoothly to rounded tip portions (54).

8. Apparatus according to any preceding Claim, including a rechargeable battery pack.

## Patentansprüche

1. Gerät zum Schneiden einer Hecke, welches Gerät aufweist:

a) ein längliches Führelement (12) mit einer Vielzahl von im allgemeinen quer zur Längsachse des Führelementes (12) ausgerichteten Schlitzen (28) zur Aufnahme einzelner Zweige der zu schneidenden Pflanze, wobei jeder Schlitz (28) ein geschlossenes Ende (32) und ein offenes Ende (30) hat; und

b) einen länglichen Schneidbalken mit einer Vielzahl von im allgemeinen quer zur Längsachse des Schneidbalkens (14) ausgerichteten Blättern (34) zum Abscheren der Zweige bei Hin- und Herbewegung des Schneidbalkens (14) bezüglich dem Führelement (12), wobei mindestens einer der Schlitze (28) ein paar Seitenwände (29) aufweist, die jeweils einen ausgesparten Bereich (40) haben; dadurch gekennzeichnet, daß der ausgesparte Bereich (40) einen konkaven, nach innengerichteten Bereich (42) hat, der dem geschlossenen Ende (32) des Schlitzes (28) zugewandt ist und sich von einer Stelle benachbart zum spitzen Ende des Blattes (34) über eine Strecke (w) senkrecht zur Längsachse des Führelementes (12) erstreckt, die zumindest gleich 50% des Abstandes zwischen dem spitzen Ende (36) des Blattes (34) des zugehörigen Schlitzes (28) und dem Näheren von Wurzelende (38) des Blattes (34) und geschlossenem Ende (32) des Schlitzes gemessen senkrecht zur Längsachse des Führelementes (12) ist.

2. Gerät nach Anspruch 1, bei dem der ausgesparte Bereich (40) gekrümmt ist.

3. Gerät nach Anspruch 1 oder 2, bei dem der minimale Winkel ($\alpha$) zwischen der Längsachse des Führelementes (12) und einer tangential an irgendeinen Punkt des nach innen gerichteten Bereichs (42) gelegten Linie etwa 60° ist.

4. Gerät nach Anspruch 1, 2 oder 3, bei dem zumindest einer der Schlitze (44) Seitenwände (46, 48) hat, die keinen ausgesparten Bereich aufweisen.

5. Gerät nach Anspruch 4, bei dem zumindest ein Schlitz (44) nahe dem freien Ende des Führelementes (12) liegt.

6. Gerät nach einem der vorhergehenden Ansprüche, bei dem jedes der Vielzahl von Blättern (34) trapezförmig ist.

7. Gerät nach einem der vorhergehenden Ansprüche, bei dem die benachbarten Seitenwände benachbarter Schlitze sich gleichmäßig zu abgerundeten Spitzenbereichen (4) verjüngen.

8. Gerät nach einem der vorhergehenden Ansprüche mit einer wiederaufladbaren Batterieeinheit.

## Revendications

1. Un appareil pour tailler une haie, ledit appareil comprend:

a) un élément de guidage allongé (12) comportant une pluralité d'encoches (28) orientées dans une direction générale transversale à l'axe longitudinal dudit élément de guidage (12) pour s'adapter aux tiges individuelles de la plante à tailler, chaque encoche (28) ayant une extrémité fermée (32) et une extrémité ouverte (30); et

b) une barre de coupe allongée comportant une pluralité de lames (34) orientées dans une direction générale transversale à l'axe longitudinal de ladite barre de coupe (14) pour cisailler les tiges lors du mouvement de va-et-vient de la barre de coupe (14) par rapport à l'élément de guidage (12); l'une au moins desdites encoches (28) comprenant une paire de parois latérales (29) dont chacune présente une partie évidée (40); caractérisé en ce que ladite partie évidée (40) comporte une partie concave tournée vers l'intérieur (42), qui fait face à l'extrémité fermée (32) de ladite encoche (28) et s'étend d'une position adjacente au bord de pointe de la lame (34) sur une distance (W) perpendiculaire à l'axe longitudinal dudit élément de guidage (12) égale à au moins 50% de la distance entre le bord de pointe (36) de la lame (34) associé à ladite encoche (28) d'une part, et le plus proche entre le bord de pied (38) de ladite lame (34) et l'extrémité fermée (32) de ladite encoche mesurée perpendiculairement à l'axe longitudinal dudit élément de guidage (12) d'autre part.

2. Un appareil selon la revendication 1, dans lequel ladite partie évidée (40) est de forme arquée.

3. Un appareil selon la revendication 1 ou 2, dans lequel l'angle minimum (α) entre l'axe longitudinal dudit élément de guidage (12) et une ligne tracée tangentiellement à n'importe quel point sur ladite partie tournée vers l'intérieur (42), est d'environ 60°.

4. Un appareil selon la revendication 1, 2 ou 3, dans lequel au moins une desdites encoches (44) comporte des parois latérales (46, 48) qui n'ont pas de partie évidée.

5. Un appareil selon la revendication 4, dans lequel cette dite encoche (44) est située à proximité de l'extrémité libre dudit élément de guidage (12).

6. Un appareil selon l'une quelconque des revendications précédentes, dans lequel chaque lame de ladite pluralité de lames (34) est trapézoïdale.

7. Un appareil selon l'une quelconque des revendications précédentes, dans lequel les parois latérales adjacentes aux encoches adjacentes s'effilent de façon régulière jusqu'à des parties arrondies (54) de sommet.

8. Un appareil selon l'une quelconque des revendications précédentes, incluant un ensemble de batteries rechargeables.

FIG. 1.
PRIOR ART

FIG. 2.
PRIOR ART

EP 0 160 420 B1

FIG. 3A.

FIG. 3B.

EP 0 160 420 B1

FIG. 4A.

FIG. 4B.

FIG. 4C.

FIG. 5.

40 28 40 28
42 42
48 44 46
α
12
42 40
12

FIG. 6.

12
32
38
52
40
42
50
h'
34
36
w
29 29
54 54

EP 0 160 420 B1